# FASCICULE DE BREVET EUROPEEN

(11) **EP 4 351 906 B1**
(45) Date de publication et mention de la délivrance du brevet: **21.10.2026**
(21) Numéro de dépôt: 22731708.8
(22) Date de dépôt: 08.06.2022
(51) Int. Cl.: B60K 1/00, F16H 3/091, F16H 1/20

(54) **ENSEMBLE MOTO-RÉDUCTEUR À FORT RAPPORT DE REDUCTION**
MOTOR-GETRIEBE-EINHEIT MIT HOHEM ÜBERSETZUNGSVERHÄLTNIS
MOTOR-GEAR UNIT HAVING A HIGH REDUCTION RATIO

(30) Priorité: 11.06.2021 FR 2106188
(43) Date de publication de la demande: 17.04.2024
(73) Titulaire: Ampere SAS, 92100 Boulogne-Billancourt (FR)
(72) Inventeur: LASSEUR, Bertrand, 78084 GUYANCOURT (FR)
(74) Mandataire: Renault Group
(86) Numéro de dépôt international: PCT/EP2022/065463
(87) Numéro de publication internationale: WO 2022/258645

(56) Documents cités:
- WO-A1-2015/084035
- DE-B3- 102019 121 735

## Description

La présente invention se rapporte au domaine des systèmes de propulsion électrique des véhicules électriques ou hybrides et porte plus particulièrement sur les réducteurs agencés en sortie d'un moteur électrique dans de tels systèmes de propulsion.

Au sein d'un véhicule dont la propulsion est assurée au moins partiellement par un moteur électrique, le fonctionnement de ce dernier génère une rotation d'un arbre moteur et un dispositif de réduction comportant notamment plusieurs roues dentées est monté notamment sur l'arbre moteur pour adapter le couple de sortie d'un moteur électrique au couple nécessaire à l'essieu pour l'entraînement du véhicule.

Dans une optique de réduction des coûts de production et/ou de commercialisation des véhicules électriques, il peut être choisi d'équiper le véhicule avec un moteur électrique à basse tension, par exemple 48V. Bien que ce type d'électrification soit moins onéreux, le moteur électrique sous tension faible présente des caractéristiques de fonctionnement telles que le couple de sortie moteur est relativement bas et il convient d'adapter la structure du dispositif de réduction en conséquence.

Une solution à ce problème est d'augmenter la quantité de roues dentées et le nombre d'étages de réduction formés à chaque engrenage entre deux roues dentées, afin de générer un rapport de réduction plus élevé lors de la transmission du couple généré par le moteur électrique. Si une telle solution peut être jugée satisfaisante en termes d'effet sur la vitesse de rotation et le couple généré, il convient de noter que le fait d'augmenter la quantité de roues dentées dans le réducteur entraîne également une augmentation du nombre d'arbres secondaires parallèles à l'arbre de sortie moteur et sur lesquels sont agencées lesdites roues dentées, générant ainsi un encombrement mécanique plus important au niveau de l'ensemble moto-réducteur.

Le document DE 10 2019 121735 B3 divulgue un ensemble moto-réducteur électrique selon le préambule de la revendication 1.

Le document WO 2015/084035 A1 divulgue un ensemble vélo-réducteur, comprenant un premier arbre configuré pour être entraîné en rotation par un pédale, un deuxième arbre et un dispositif de réduction comprenant une pluralité de roues dentées agencées sur le premier arbre et le deuxième arbre, le dispositif de réduction étant configuré pour transmettre un couple généré par le pédale jusqu'à un plateau de sortie formant partie du dispositif de réduction, le dispositif de réduction comporte deux éléments dentés distincts disposés sur le premier arbre deux roues dentées distinctes disposées sur le deuxième arbre, chaque élément denté disposé sur le premier arbre étant engrené avec l'une des roues dentées disposées sur le deuxième arbre, le plateau de sortie faisant partie d'un bloc de roues dentées formant l'un des éléments dentés disposés sur le premier arbre.

La présente invention permet de mettre en œuvre un réducteur en sortie d'un moteur électrique apte à générer une forte réduction et une augmentation importante du couple d'entraînement à l'essieu et donc convenant à un moteur électrique basse tension, tout en limitant l'encombrement mécanique résultant de la mise en œuvre d'une telle réduction. Plus particulièrement, l'invention propose un ensemble moto-réducteur électrique d'un véhicule électrique ou hybride, comprenant un premier arbre configuré pour être entraîné en rotation par un moteur électrique, un deuxième arbre et un dispositif de réduction comprenant une pluralité de roues dentées agencées sur le premier arbre et le deuxième arbre, le dispositif de réduction étant configuré pour transmettre un couple généré par le moteur électrique jusqu'à un différentiel du véhicule via une roue dentée de sortie formant partie du dispositif de réduction, caractérisé en ce que le dispositif de réduction comporte au moins deux éléments dentés distincts disposés sur le premier arbre et au moins deux roues dentées distinctes disposées sur le deuxième arbre, chaque élément denté disposé sur le premier arbre étant engrené avec l'une des roues dentées disposées sur le deuxième arbre, la roue de sortie faisant partie d'un bloc de roues dentées formant l'un des éléments dentés disposés sur le premier arbre.

En d'autres termes, le dispositif de réduction est configuré de telle sorte qu'un premier étage de réduction peut être agencé du premier arbre vers le deuxième arbre, formé par l'interaction d'une roue dentée du premier arbre et d'une roue dentée du deuxième arbre, et qu'un deuxième étage de réduction peut être agencé du deuxième arbre vers le premier arbre, formée par l'interaction d'une roue dentée du deuxième arbre, distincte de celle participant au premier étage de réduction, avec une roue dentée du premier arbre, distincte de celle participant au premier étage de réduction.

Grâce au dispositif de réduction spécifique de l'invention, deux étages de réduction peuvent être mis en œuvre en utilisant uniquement deux arbres. Autrement dit, le couple est généré à partir du premier arbre, qui correspond à l'arbre mis en rotation par le moteur électrique, ou arbre primaire, et est transmis à une première roue dentée qui est configurée pour engrener une deuxième roue dentée montée sur le deuxième arbre, en formant un premier étage de réduction qui permet de transmettre en direction de ce deuxième arbre le couple de rotation de l'arbre primaire en sortie moteur, ou premier arbre. Ce couple est transmis à une troisième roue dentée solidaire du deuxième arbre et qui est apte à s'engrener avec un bloc de roues dentées disposé sur le premier arbre en formant ainsi un deuxième étage de réduction. Cela permet ainsi d'éviter une structure classique dans laquelle chaque étage de réduction est formé entre des arbres successifs qui impliquerait ici la présence de deux autres arbres en plus de l'arbre primaire pour former les deux étages de réduction. Cela permet ainsi d'éviter de générer un encombrement mécanique trop important du fait de la présence d'arbres successifs, tout en assurant un nombre d'étages de réduction suffisant pour permettre la transmission d'un couple élevé au train de roues du véhicule, malgré un faible voltage du moteur électrique, par exemple 48 V, le faible couple d'un tel moteur électrique s'en retrouvant ainsi compensé.

Selon l'invention, le dispositif réducteur comporte au moins ces deux étages de réduction formées avec des roues dentées et éléments dentés disposés sur uniquement deux arbres, ces deux étages de réduction formant un aller et retour entre le premier arbre et le deuxième arbre. Le bloc de roues dentées disposé sur le premier arbre et entraîné en rotation au niveau du deuxième étage de réduction intègre la roue dentée de sortie, qui est destinée par la suite à coopérer directement, ou via des roues dentées intermédiaires et des arbres de rotation intermédiaires avec le différentiel pour transmettre le couple moteur à l'essieu du véhicule.

Selon une caractéristique de l'invention, le bloc de roues dentées disposé sur le premier arbre est monté en rotation libre autour du premier arbre. Un tel montage permet de créer un déphasage de rotation entre ce bloc de roues dentées et le premier arbre, de sorte que le premier arbre puisse sans contrainte tourner au couple de sortie du moteur électrique. Le premier arbre peut ainsi entraîner la première roue dentée si cette dernière est solidaire du premier arbre ou bien si elle est rendue solidaire dudit premier arbre, par exemple via un coupleur, et ce sans nuire à la rotation du bloc de roues dentées.

Selon une caractéristique de l'invention, le dispositif de réduction comprend une première roue dentée agencée autour du premier arbre et le bloc de roues dentées liées entre elles et monté en libre rotation autour du premier arbre, le bloc de roues dentées comprenant la roue dentée de sortie et au moins une roue dentée d'entraînement apte à engrener une roue dentée du deuxième arbre et entraîner la roue dentée de sortie en rotation.

La première roue dentée est directement liée au premier arbre et est donc mise en rotation en phase avec celui-ci, contrairement au bloc de roues dentées qui est monté fou autour du premier arbre qui sert donc uniquement de support mécanique au bloc de roues dentées sans influer directement sur sa rotation. Lors de la rotation du premier arbre, seule la première roue dentée est apte à transmettre un couple au deuxième arbre au niveau du premier étage de réduction. Le bloc de roues dentées est quant à lui impliqué dans le deuxième étage de réduction allant du deuxième arbre vers le premier arbre.

Les roues dentées du bloc de roues dentées sont liées entre elles de sorte que lorsqu'une roue dentée du bloc de roues dentées est entraînée en rotation, chacune des autres roues dentées du bloc de roues dentées tourne à la même vitesse, et de telle sorte que chaque roue dentée du bloc de roues dentées est montée libre autour du premier arbre. La roue dentée d'entraînement formant partie de ce bloc de roues dentées est configurée pour engrener une roue dentée du deuxième arbre pour former le deuxième étage de réduction, et c'est donc la roue dentée d'entraînement qui met en rotation la roue dentée de sortie du fait de la liaison de l'ensemble des roues dentées du bloc de roues dentées qui vient d'être évoquée.

Selon une caractéristique de l'invention, le dispositif de réduction comprend une deuxième roue dentée et une troisième roue dentée agencée autour du deuxième arbre, la deuxième roue dentée étant apte à interagir avec la première roue dentée de sorte à former le premier étage de réduction, la troisième roue dentée étant apte à interagir avec la roue dentée d'entraînement du bloc de roues dentées de sorte à former le deuxième étage de réduction. Ce sont 1a deuxième roue dentée et la troisième roue dentée qui permettent ainsi la transmission du couple dans un sens puis dans l'autre entre les premier et deuxième arbres. La troisième roue dentée est entraînée par le deuxième arbre tournant à une vitesse définie par le premier étage de réduction et cette troisième roue dentée engrène la première roue dentée d'entraînement de sorte que deux étages de réduction sont mis en œuvre entre les deux seuls premier et deuxième arbres.

Selon des caractéristiques de l'invention, la troisième roue dentée est en libre rotation autour du deuxième arbre et le deuxième arbre comprend un coupleur apte à être déplacé le long du deuxième arbre et à coopérer avec la troisième roue dentée pour coupler en rotation le deuxième arbre avec la troisième roue dentée. Autrement dit, le coupleur permet de solidariser la troisième roue dentée au deuxième arbre afin que la troisième roue dentée soit entraînée en rotation en phase avec la rotation du deuxième arbre. Le coupleur peut par exemple coopérer par complémentarité de forme avec la troisième roue dentée, par traction magnétique ou autre.

Selon une caractéristique de l'invention, le dispositif de réduction comprend une quatrième roue dentée agencée en libre rotation autour du deuxième arbre, le coupleur étant apte à coopérer avec la quatrième roue dentée et étant configuré pour être entraîné en rotation par le deuxième arbre et pour entraîner en rotation la quatrième roue dentée en cas de coopération avec celle-ci. En d'autres termes, le coupleur est mobile entre une position dans laquelle il peut solidariser la troisième roue dentée au deuxième arbre et une position dans laquelle il peut solidariser la quatrième roue dentée au deuxième arbre en fonction du besoin. Le coupleur présente également une autre position, dite position neutre, où il ne solidarise aucun des roues dentées au deuxième arbre.

Il s'agit d'un premier mode de réalisation alternatif de l'ensemble moto-réducteur selon l'invention. La troisième roue dentée et la quatrième roue dentée peuvent notamment présenter des diamètres primitifs différents et/ou des nombres de dents différents. En fonction de la position du coupleur, le deuxième étage de réduction est formé, du deuxième arbre vers le premier arbre, via la troisième roue dentée ou via la quatrième roue dentée et il en résulte un rapport de réduction différent.

Les positions possibles du coupleur permettent de mettre le dispositif de réduction dans une première configuration, avec la troisième roue dentée qui engrène une roue dentée d'entraînement du bloc de roues dentées, ou dans une deuxième configuration, avec la quatrième roue dentée qui engrène une roue dentée d'entraînement du bloc de roues dentées. Le dispositif de réduction peut également présenter une troisième configuration dite neutre où le coupleur est en position neutre tel qu'évoqué précédemment, c'est-à-dire que le coupleur ne solidarise aucune des roues dentées à l'arbre. Cette troisième configuration, est utile en mode hybride pour ne pas entrainer le moteur électrique quand celui-ci n'est plus utilisé pour la propulsion du véhicule. La possibilité d'avoir deux configurations différentes permet d'avoir un déplacement du véhicule avec deux rapports de vitesse différents, tandis que la troisième configuration permet d'économiser l'énergie du moteur électrique. A titre d'exemple, la première configuration peut correspondre à un rapport de vitesse faible et/ou modéré, par exemple lors du démarrage du véhicule, tandis que la deuxième configuration peut correspondre à un rapport de vitesse plus élevé. La troisième configuration peut s'apparenter à une roue libre ou à une déconnexion du système.

Selon une caractéristique de l'invention, la roue dentée d'entraînement est une première roue dentée d'entraînement, le bloc de roues dentées comprenant une deuxième roue dentée d'entraînement apte à coopérer avec l'une des roues dentées du deuxième arbre pour entraîner la roue dentée de sortie en rotation. Selon ce même premier mode de réalisation alternatif, le bloc de roues dentées correspond à un trio de roues dentées liées les unes aux autres, et formant un ensemble monté libre en rotation autour du premier arbre, et comprenant la roue dentée de sortie et les deux roues dentées d'entraînement. L'une des roues dentées d'entraînement, à savoir la roue dentée d'entraînement qui engrène avec la roue dentée associée au coupleur sur le deuxième arbre, entraîne ainsi les deux autres roues dentées en phase avec la rotation transmise.

Selon une caractéristique de l'invention, la troisième roue dentée est apte à interagir avec la première roue dentée d'entraînement et la quatrième roue dentée est apte à interagir avec la deuxième roue dentée d'entraînement, le deuxième étage de réduction étant formé par l'interaction entre la troisième roue dentée et la première roue dentée d'entraînement selon une première configuration, et par l'interaction entre la quatrième roue dentée et la deuxième roue dentée d'entraînement selon une deuxième configuration. En fonction des diamètres des roues dentées utilisées pour former le deuxième étage de réduction, le bloc de roues dentées, et par analogie la roue dentée de sortie, n'est pas entraîné en rotation à la même vitesse en fonction de quelle roue dentée d'entraînement est utilisée pour le deuxième étage de réduction.

La mise en rotation de l'une des roues dentées d'entraînement au sein du deuxième étage de réduction entraîne également la rotation de l'autre roue dentée d'entraînement du faire de la configuration monobloc du bloc de roues dentées. Cette autre roue dentée d'entraînement entraîne donc également en rotation la troisième ou quatrième roue dentée agencée au niveau du deuxième arbre et non utilisée pour le deuxième étage de réduction. Une telle rotation est sans conséquence du fait de la libre rotation de cette troisième ou quatrième roue dentée autour du deuxième arbre, car non associée au coupleur.

Selon des caractéristiques de l'invention, la première roue dentée étant en libre rotation autour du premier arbre et le premier arbre comprend un coupleur apte à être déplacé le long du premier arbre et à coopérer avec la première roue dentée ou avec la roue dentée d'entraînement, le coupleur étant configuré pour être entraîné en rotation par le premier arbre et pour entraîner en rotation la première roue dentée ou la roue dentée d'entraînement en cas de coopération avec l'une ou l'autre. Il s'agit là d'un deuxième mode de réalisation alternatif de l'ensemble moto-réducteur selon l'invention. Contrairement au premier mode de réalisation alternatif où le coupleur est positionné au niveau du deuxième arbre, ici le coupleur est positionné au niveau du premier arbre. La première roue dentée est, selon ce deuxième mode de réalisation alternatif, montée folle autour du premier arbre. Toujours selon le deuxième mode de réalisation alternatif, le bloc de roues dentées ne comprend qu'une unique roue dentée d'entraînement. Le bloc de roues dentées correspond donc ici à un duo de roues dentées solidarisées l'une à l'autre et comprenant l'unique roue dentée d'entraînement et la roue dentée de sortie.

Selon une caractéristique de l'invention, le coupleur est apte à agencer le dispositif de réduction selon une première configuration en coopérant avec la première roue dentée, ou selon une deuxième configuration en coopérant avec la roue dentée d'entraînement.

Le coupleur peut être associé à la première roue dentée pour lier la rotation de cette première roue dentée à la rotation du premier arbre. Dans cette situation, c'est-à-dire selon la première configuration, le couple est transmis tel que cela a été décrit précédemment, c'est-à-dire du premier arbre vers le deuxième arbre, puis du deuxième arbre vers le premier arbre. Selon le deuxième mode de réalisation alternatif, la deuxième roue dentée et la troisième roue dentée sont solidarisées au deuxième arbre, et le dispositif de réduction n'inclut pas la quatrième roue dentée. La troisième roue dentée est liée à la roue dentée d'entraînement et entraîne en rotation cette dernière afin de former le deuxième étage de réduction. Le premier étage de réduction est quant à lui formé, tel que cela a été décrit précédemment, par l'engrenage entre la première roue dentée et la deuxième roue dentée.

Selon la deuxième configuration, le coupleur vient coopérer directement avec la roue dentée d'entraînement. Le premier arbre vient donc directement entraîner la roue dentée d'entraînement, et donc la roue dentée de sortie qui est solidarisée à la roue dentée d'entraînement, de sorte qu'il n'y a pas d'étage de réduction formé entre le premier arbre et le deuxième arbre.

Selon une caractéristique de l'invention, un axe de rotation du premier arbre et un axe de rotation du deuxième arbre sont projetés sur le moteur électrique. On limite ainsi l'encombrement mécanique lié aux arbres du dispositif de réduction et aux roues dentées que ces arbres portent, en positionnant ces arbres dans un prolongement axial du moteur électrique.

Selon une caractéristique de l'invention, l'ensemble moto-réducteur comprend un troisième arbre, le dispositif de réduction comprenant une première roue dentée additionnelle, une deuxième roue dentée additionnelle, toutes deux agencées autour du troisième arbre, et une troisième roue dentée additionnelle configurée pour être associée au différentiel du véhicule. La présence du troisième arbre ainsi que de roues dentées additionnelles permet donc de poursuivre la transmission du couple au-delà de la roue dentée de sortie et d'augmenter le nombre d'étages de réduction afin d'améliorer encore le rapport de réduction de l'ensemble moto-réducteur selon l'invention.

Selon une caractéristique de l'invention, la roue dentée de sortie est apte à entraîner en rotation la première roue dentée additionnelle de sorte à former un premier étage de réduction additionnel. Le troisième arbre est ainsi positionné à proximité du premier arbre afin que la roue dentée de sortie puisse interagir avec la première roue dentée additionnelle. Ainsi, lorsque l'ensemble moto-réducteur fonctionne selon n'importe lequel des modes de réalisation évoqués précédemment, et selon n'importe quelle configuration évoquée précédemment, la roue dentée de sortie entraîne en rotation la première roue dentée additionnelle, formant ainsi le premier étage de réduction additionnel.

Selon une caractéristique de l'invention, la première roue dentée additionnelle est apte à entraîner en rotation la deuxième roue dentée additionnelle via le troisième arbre, la deuxième roue dentée additionnelle étant apte à entraîner en rotation la troisième roue dentée additionnelle de sorte à former un deuxième étage de réduction additionnel. En d'autres termes, la rotation de la première roue dentée additionnelle via l'engrenage avec la roue dentée de sortie permet la mise en rotation du troisième arbre et par suite la rotation de la deuxième roue dentée additionnelle, cette dernière ainsi que la première roue dentée additionnelle étant directement liée autour du troisième arbre.

La deuxième roue dentée additionnelle et la troisième roue dentée additionnelle interagissent entre elles afin de former le deuxième étage de réduction additionnel, la deuxième roue dentée additionnelle entraînant en rotation la troisième roue dentée additionnelle qui elle est par suite liée au différentiel du véhicule, permettant de transmettre le couple généré à l'origine par le moteur électrique jusqu'à un train de roues du véhicule.

Il résulte de ce qui précède que l'ensemble moto-réducteur selon l'invention peut ainsi former jusqu'à quatre étages de réduction avec seulement trois arbres de rotation, ce qui permet d'avoir un couple transmis aux trains de roues important malgré le faible couple du moteur électrique et en limitant l'encombrement mécanique. Le ratio entre encombrement mécanique et rapport de réduction est particulièrement avantageux selon l'invention.

Selon une caractéristique de l'invention, le troisième arbre est disposé dans le prolongement du moteur électrique, avec l'axe de rotation du troisième arbre qui est projeté sur le moteur électrique. Tout comme le premier arbre et le deuxième arbre, le troisième arbre est donc agencé dans un prolongement du moteur électrique. On limite ainsi l'encombrement mécanique lié aux arbres à une projection axiale des dimensions du moteur électrique, et ce même en intégrant un arbre supplémentaire à l'ensemble moto-réducteur.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] est une représentation schématique d'un ensemble moto-réducteur électrique mettant en œuvre le principe de l'invention,
[Fig.2] est une représentation d'un premier mode de réalisation alternatif de l'ensemble moto-réducteur électrique,
[Fig.3] est une représentation de l'ensemble moto-réducteur de la [Fig.2] selon une première configuration, illustrant schématiquement une transmission d'un couple avec un premier rapport de réduction,
[Fig.4] est une représentation de l'ensemble moto-réducteur de la [Fig.2] selon une deuxième configuration, illustrant schématiquement une transmission d'un couple avec un deuxième rapport de réduction,
[Fig.5] est une représentation schématique d'un deuxième mode de réalisation alternatif de l'ensemble moto-réducteur électrique,
[Fig.6] est une représentation de l'ensemble moto-réducteur de la [Fig.5] selon une première configuration, illustrant schématiquement une transmission d'un couple avec un premier rapport de réduction,
[Fig.7] est une représentation de l'ensemble moto-réducteur de la [Fig.5] selon une deuxième configuration, illustrant schématiquement une transmission d'un couple avec un deuxième rapport de réduction.

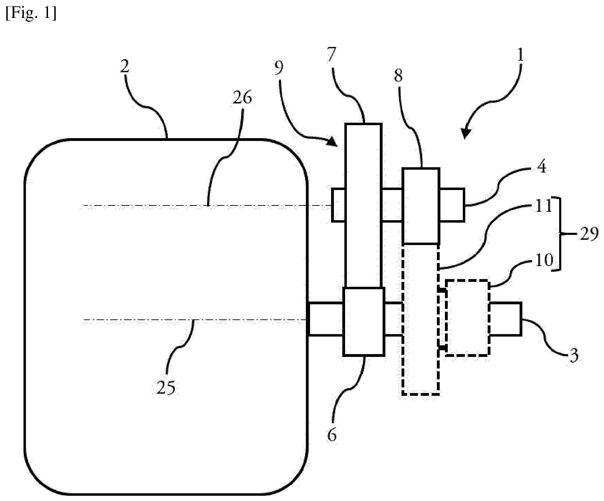

L'ensemble des figures 1 à 7 représente notamment un moteur en sortie duquel un dispositif réducteur est agencé, le dispositif réducteur comportant une pluralité de roues dentées, chacune des roues dentées étant agencée autour d'un arbre, les roues dentées d'arbres distincts étant aptes à coopérer par engrenage pour former un étage de réduction permettant de modifier le couple et la vitesse de rotation d'un arbre à l'autre.

Les roues dentées peuvent être liées à l'arbre autour duquel elles sont agencées, auquel cas une telle roue dentée peut soit être entraînée en rotation par une rotation de l'arbre et être apte à transmettre la rotation à une autre roue dentée avec laquelle elle est engrenée, soit être entraînée en rotation par une autre roue dentée avec laquelle elle est engrenée et être apte à transmettre la rotation audit arbre.

Les roues dentées peuvent également être agencées autour d'un arbre tout en étant en libre rotation autour de celui-ci. Autrement dit, une telle roue dentée peut être entraînée en rotation, par une autre roue dentée avec laquelle elle est engrenée, avec une vitesse de rotation indépendante de la vitesse de rotation de l'arbre autour duquel ladite roue dentée est agencée. Selon cette configuration, la roue dentée est dite montée folle autour de l'arbre.

Par souci de clarté, pour l'ensemble des figures, les roues dentées directement liées à leur arbre respectif seront représentées en traits pleins tandis que les roues dentées montées folles autour de leur arbre respectif seront représentées en pointillés.

La [Fig.1] représente un ensemble moto-réducteur électrique 1 relié à un moteur électrique 2 notamment par l'intermédiaire d'un premier arbre 3, ou arbre primaire, consistant en l'arbre de sortie moteur. L'ensemble moto-réducteur électrique 1 est donc agencé au sein d'un véhicule électrique ou hybride, c'est-à-dire un véhicule dont la propulsion est au moins partiellement assurée via l'énergie électrique transformée par le moteur électrique 2 en énergie mécanique. Le moteur électrique 2 est un moteur délivrant un faible couple, par exemple un moteur de 48 V, installé dans le véhicule notamment dans le but de réduire le coût dudit véhicule. Un tel moteur électrique 2 est caractéristique en ce qu'il présente une vitesse de rotation maximale élevée et en ce qu'il ne peut générer qu'un couple faible, et il est dans ce contexte associé à un dispositif de réduction 9 afin que soit généré en sortie de l'ensemble moto-réducteur électrique, formé par le moteur électrique et le dispositif de réduction, un couple permettant une propulsion efficace du véhicule, et ce malgré le faible couple du moteur électrique 2.

Selon l'invention, l'ensemble moto-réducteur 1 est configuré pour présenter un encombrement mécanique limité au maximum, avec notamment un dispositif de réduction qui s'inscrit dans le prolongement du moteur électrique et qui ne dépasse que peu ou pas de l'enveloppe défini par le prolongement de ce moteur électrique, tout en permettant un fort rapport de réduction entre le couple de sortie moteur et le couple transmis au différentiel et au train de roues du véhicule, et donc un grand nombre d'étages de réduction.

Pour ce faire, le dispositif de réduction 9 comprend un premier arbre 3, un deuxième arbre 4, et une pluralité de roues dentées. Les roues dentées du dispositif de réduction 9 sont agencées autour du premier arbre 3 ou du deuxième arbre 4. Le premier arbre 3, pouvant être appelé arbre moteur, est directement lié au moteur électrique 2 et forme plus particulièrement l'arbre de sortie du moteur. Ce dernier, lorsqu'il est en fonctionnement et assure la propulsion du véhicule, est alimenté électriquement pour générer un couple de sortie au premier arbre 3. Le deuxième arbre 4 s'étend parallèlement à l'arbre primaire et les roues dentées sont réparties sur chacun de ces deux arbres de manière à pouvoir s'engrener et former des étages de réduction.

Le dispositif de réduction 9 comprend une première roue dentée 6, agencée autour du premier arbre 3 et directement lié à celui-ci. Ainsi, lorsque le premier arbre 3 est mis en rotation par le fonctionnement du moteur électrique 2, la première roue dentée 6 est alors mise en rotation par le premier arbre 3 selon une vitesse de rotation et un couple d'entraînement en phase avec celui-ci.

Le dispositif de réduction 9 comprend également une deuxième roue dentée 7 agencée autour du deuxième arbre 4 et liée à celui-ci. La deuxième roue dentée 7 est disposée sur le deuxième arbre 4 de manière à s'engrener, c'est-à-dire interagir par complémentarité de formes de leurs dents, avec la première roue dentée 6. Le couple généré par le moteur électrique 2 peut ainsi être transmis du premier arbre 3 vers le deuxième arbre 4 via l'engrenage entre la première roue dentée 6 et la deuxième roue dentée 7. La deuxième roue dentée 7 est ainsi mise en rotation par la première roue dentée 6, et, du fait de sa liaison directe au deuxième arbre 4, entraîne à son tour ce dernier en rotation.

Tel que cela est illustré sur la [Fig.1], le diamètre de la première roue dentée 6 est plus petit que le diamètre de la deuxième roue dentée 7. Cette différence de diamètre génère une rotation du deuxième arbre 4 à une vitesse plus faible que la vitesse de rotation du premier arbre 3, et permet donc une réduction de la vitesse et une augmentation du couple transmis entre le premier arbre 3 et le deuxième arbre 4. On parle alors d'étage de réduction entre le premier arbre 3 et le deuxième arbre 4, l'interaction entre la première roue dentée 6 et la deuxième roue dentée 7 formant un premier étage de réduction de l'ensemble moto-réducteur.

Le dispositif de réduction 9 comprend également une troisième roue dentée 8 agencée autour du deuxième arbre 4 et lié à celui-ci, ainsi qu'un bloc de roues dentées 29 qui est monté fou autour du premier arbre 3. La troisième roue dentée 8 est solidaire en rotation du deuxième arbre 4, lui-même mis en rotation par la deuxième roue dentée 7 tel qu'évoqué précédemment.

Le bloc de roues dentées 29 correspond à un ensemble de roues dentées liées entre elles. Ainsi lorsque l'une des roues dentées du bloc de roues dentées 29 est entraînée en rotation, par exemple par une autre roue dentée ou par un arbre, c'est alors l'ensemble du bloc de roues dentées 29 qui est entraîné en rotation. Et dans ce contexte, lorsqu'il est précisé que le bloc de roues dentées 29 est monté fou autour du premier arbre 3, il convient de comprendre que chacune des roues dentées formant ce bloc de roues dentées est montée libre en rotation autour du premier arbre, et donc que le bloc de roues dentées 29 peut être entraîné en rotation de manière indépendante de la rotation du premier arbre 3, avec chacune des roues dentées de ce bloc de roues dentées qui suit cette rotation.

Tel qu'illustré sur la [Fig.1], le bloc de roues dentées 29 se compose d'une roue dentée de sortie 10 et d'une roue dentée d'entraînement 11. La roue dentée d'entraînement 11 interagit avec la troisième roue dentée 8 évoquée précédemment et présente par ailleurs un diamètre plus élevé que le diamètre de la troisième roue dentée 8. Ainsi, tout comme pour la première roue dentée 6 et la deuxième roue dentée 7, la vitesse de rotation est de nouveau réduite et le couple est de nouveau augmenté lors de l'engrenage entre la troisième roue dentée 8 et la roue dentée d'entraînement 11, en formant ici un deuxième étage de réduction.

Le dispositif de réduction 9 est ainsi particulier ici en ce qu'il permet un premier étage de réduction entre un élément denté du premier arbre 3 et un élément denté du deuxième arbre 4, et un deuxième étage de réduction entre d'autres éléments dentés disposés sur ces mêmes deux arbres. Plus particulièrement, le dispositif de réduction est ici particulier en ce que l'arbre de sortie moteur, ici le premier arbre 3, comporte une roue dentée menant, c'est-à-dire initiant la rotation d'une autre roue dentée dans un étage de réduction, et une roue dentée menée, c'est-à-dire entraînée en rotation par une autre roue dentée.

La configuration du dispositif de réduction selon l'invention, avec un aller-retour des étages de réduction par rapport au premier arbre 3, permet de limiter le nombre d'arbres porteurs d'élément denté pour réaliser ces deux étages de réduction, et cela permet ainsi de minimiser l'encombrement mécanique du dispositif de réduction 9 et plus généralement de l'ensemble moto-réducteur 1. Cette réduction d'encombrement se constate notamment, en référence à la [Fig.1], en ce que l'ensemble des arbres nécessaires selon l'invention pour réaliser ces deux étages de réduction sont agencés dans le prolongement du moteur électrique, avec le premier axe de rotation 25 du premier arbre 3 et le deuxième axe de rotation 26 du deuxième arbre 4 qui sont sécants au moteur électrique 2.

Lorsque la roue dentée d'entraînement 11 est entraînée en rotation, par interaction avec la troisième roue dentée, l'ensemble du bloc de roues dentées 29 et donc notamment la roue de sortie 10 est entraîné en rotation à la même vitesse, indépendamment de la vitesse de rotation de l'arbre primaire, ou premier arbre 3, du fait du montage libre en rotation de l'ensemble du bloc de roues dentées sur ce premier arbre. La roue dentée de sortie 10 peut alors entraîner en rotation de manière directe ou indirecte un différentiel, qui lui-même entraîne un essieu afin d'assurer la propulsion du véhicule.

L'ensemble moto-réducteur 1 selon l'invention permet donc de mettre en place un compromis entre un rapport de réduction élevé du dispositif de réduction, un tel rapport de réduction étant adapté à un moteur électrique 2 délivrant un faible couple, et une limitation de l'encombrement mécanique.

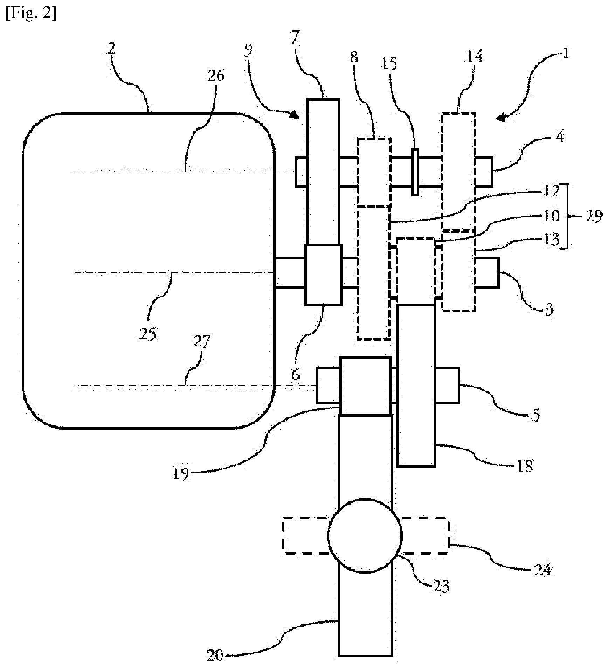

La [Fig.2] représente un premier mode de réalisation alternatif de l'ensemble moto-réducteur 1 selon l'invention. Ce premier mode de réalisation alternatif reprend partiellement l'agencement représenté sur la [Fig.1], mais le dispositif de réduction 9 comprend ici un nombre plus élevé de roues dentées comparé au dispositif de réduction 9 représenté sur la [Fig.1]. Le premier mode de réalisation alternatif de l'ensemble moto-réducteur 1 comprend par ailleurs un troisième arbre 5 qui permet, tel que cela va être décrit, d'augmenter le rapport de réduction par rapport à ce qui a été décrit en [Fig.1], toujours dans le contexte d'un compromis entre l'obtention d'un fort rapport de réduction et un encombrement mécanique de l'ensemble moto-réducteur 1. Il est possible d'observer à ce sujet que le troisième axe de rotation 27 du troisième arbre 5 est lui aussi sécant au moteur électrique 2, le troisième arbre 5 étant agencé dans un prolongement du moteur électrique 2.

Le dispositif de réduction dans ce premier mode de réalisation alternatif reprend le principe précédemment décrit avec les deux premiers étages de réduction formés par des interactions entre des roues dentées réparties sur seulement deux arbres, mais il permet de prendre deux configurations différentes dans lequel le rapport de réduction entre le couple de sortie moteur et la roue dentée de sortie 10 peut varier, notamment pour obtenir des vitesses de rotation des roues du véhicule différentes pour un même couple moteur, et pour permettre ainsi un fonctionnement du véhicule électrique ou hybride à deux rapports de réductions, à savoir un premier rapport de réduction pour les vitesses véhicule faibles et/ou modérées et un deuxième rapport de réduction pour les vitesses véhicule plus élevées.

Tel que cela est représenté sur la [Fig.2], la troisième roue dentée 8, selon le premier mode de réalisation alternatif de l'ensemble moto-réducteur 1, est agencée en libre rotation autour du deuxième arbre 4. Le dispositif de réduction 9 comprend par ailleurs une quatrième roue dentée 14, également agencée en libre rotation autour du deuxième arbre 4.

Le bloc de roues dentées 29 est également différent par rapport à ce qui est illustré sur la [Fig.1] notamment en ce qu'il comporte une roue dentée d'entraînement supplémentaire, destinée à coopérer avec la quatrième roue dentée ajoutée sur le deuxième arbre 4. Selon le premier mode de réalisation alternatif, le bloc de roues dentées 29 comprend trois roues dentées parmi lesquelles la roue dentée de sortie 10 identique à ce qui a été décrit précédemment, une première roue dentée d'entraînement 12 correspondant à la roue dentée d'entraînement 11 décrite en référence à la [Fig.1], et une deuxième roue dentée d'entraînement 13. Conformément à ce qui a été décrit précédemment, les deux roues dentées d'entraînement et la roue dentée de sortie forment un ensemble solidaire qui est monté libre en rotation sur le deuxième arbre 4.

La première roue dentée d'entraînement 12 et la deuxième roue dentée d'entraînement 13 interagissent respectivement avec la troisième roue dentée 8 et avec la quatrième roue dentée 14.

La roue dentée de sortie 10, en plus d'être liée aux roues dentées d'entraînement, interagit également avec une première roue dentée additionnelle 18, agencée autour du troisième arbre évoqué précédemment et directement liée à celui-ci. La première roue dentée additionnelle 18 peut ainsi être entraînée en rotation par la roue dentée de sortie 10, et de ce fait entraîner en rotation le troisième arbre 5.

Le dispositif de réduction 9 comprend également une deuxième roue dentée additionnelle 19, agencée autour du troisième arbre 5 et liée à celui-ci. La mise en rotation du troisième arbre 5 par la première roue dentée additionnelle 18 entraîne donc la rotation de la deuxième roue dentée additionnelle 19.

Le dispositif de réduction 9 comprend enfin une troisième roue dentée additionnelle 20, interagissant avec la deuxième roue dentée additionnelle 19, et configurée pour être liée à un différentiel 23 afin de transmettre le couple d'entraînement du véhicule à destination de l'essieu 24.

Le dispositif de réduction 9 est apte à prendre deux configurations avec une configuration dans laquelle le deuxième étage de réduction est formé par l'engrenage entre la troisième roue dentée 8 et la première roue d'entraînement 12 et avec une autre configuration dans laquelle le deuxième étage de réduction est formé par l'engrenage entre la quatrième roue dentée 12 et la deuxième roue d'entraînement 13.

A cet effet, le deuxième arbre 4 comprend un coupleur 15 qui est solidaire en rotation du deuxième arbre 4 et qui est configuré pour se déplacer le long du deuxième arbre 4 entre une position dans laquelle il coopère avec la troisième roue dentée 8 et une position dans laquelle il coopère avec la quatrième roue dentée 14. Lorsque le coupleur 15 coopère avec l'une des roues dentées parmi la troisième roue dentée 8 ou la quatrième roue dentée 14, ladite roue dentée, à l'origine en libre rotation autour du deuxième arbre 4, est alors solidarisée à celui-ci, par exemple par complémentarité de forme, par attraction magnétique ou autre en fonction du type de coupleur 15 utilisé, et cette roue dentée est alors solidaire en rotation du deuxième arbre 4. Le coupleur 15 présente également une position dite neutre sans entrainement de roues dentées. La position neutre du coupleur 15 correspond à la position telle que représentée sur la [Fig.2].

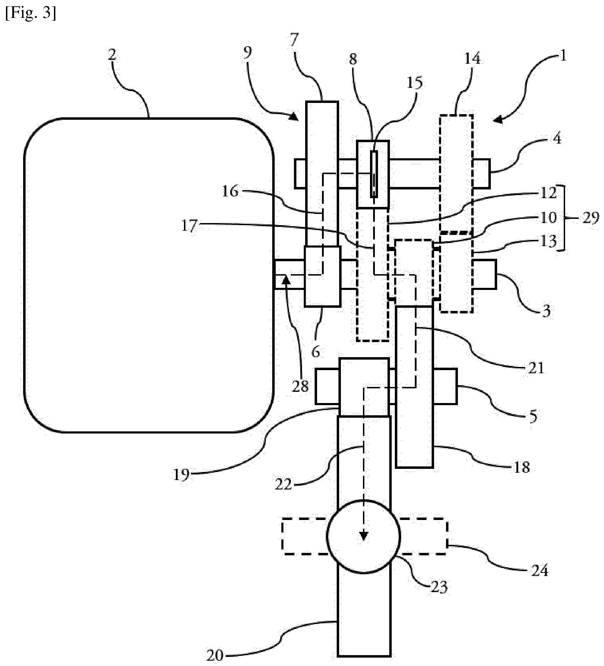

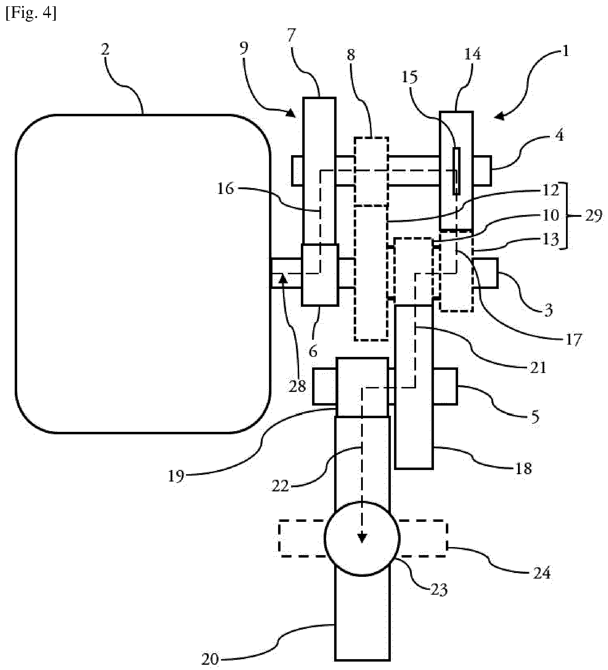

Lorsque le coupleur 15 coopère avec la troisième roue dentée 8, le dispositif de réduction 9 est agencé selon une première configuration qui est illustrée sur la [Fig.3]. Lorsque le coupleur 15 coopère avec la quatrième roue dentée 14, le dispositif de réduction 9 est alors agencé selon une deuxième configuration qui est illustrée sur la [Fig.4].

La [Fig.3] illustre la transmission d'un couple 28 généré par le moteur électrique 2 et transmis jusqu'à l'essieu 24 au sein du premier mode de réalisation alternatif de l'ensemble moto-réducteur 1, et selon la première configuration évoquée précédemment. Dans le contexte d'un moteur électrique 48V, à basse tension, le couple en sortie moteur présente une valeur faible et le premier arbre 3 tourne à une vitesse de rotation élevée.

Le premier arbre 3 entraîne en rotation uniquement la première roue dentée 6, le bloc de roues dentées 29 étant en libre rotation autour de ce premier arbre 3. La première roue dentée 6 entraîne en rotation la deuxième roue dentée 7, formant ainsi un premier étage de réduction 16.

La rotation de la deuxième roue dentée 7 implique la rotation du deuxième arbre 4, à une vitesse réduite par rapport à la rotation du premier arbre 3. Selon la première configuration, le coupleur 15 coopère avec la troisième roue dentée 8 de sorte que cette troisième roue dentée est solidaire en rotation du deuxième arbre 4 et est entraînée en rotation par le deuxième arbre 4.

La troisième roue dentée 8 est configurée de manière à interagir avec la première roue dentée d'entraînement 12 du bloc de roues dentées 29 et le couple 28 est transmis de la troisième roue dentée 8 au bloc de roues dentées 29 agencée autour du premier arbre 3, en formant un deuxième étage de réduction 17.

La première roue dentée d'entraînement 12 étant entraînée en rotation par engrenage avec la première roue dentée 8, c'est l'ensemble du bloc de roues dentées 29 qui est entraîné en rotation, et donc également la deuxième roue dentée d'entraînement 13 et la roue dentée de sortie 10.

La deuxième roue dentée d'entraînement 13 est configurée pour coopérer avec la quatrième roue dentée 14 de sorte que la mise en rotation du bloc de roues dentées 29 génère un engrenage entre la deuxième roue d'entraînement 13 et la quatrième roue dentée 14, mais il convient de noter que cet engrenage n'a pas de conséquence sur le fonctionnement précédemment décrit puisque les deux roues dentées de cet engrenage sont montées libre en rotation et non couplées sur leur arbre respectif.

La roue dentée de sortie 10, quant à elle, transmet le couple 28 à la première roue dentée additionnelle 18 avec laquelle elle interagit. Une telle interaction constitue ainsi un premier étage de réduction additionnel 21. La première roue dentée additionnelle 18 étant solidaire du troisième arbre 5, ce dernier est donc également entraîné en rotation et entraîne à son tour en rotation la deuxième roue dentée additionnelle 19, également solidaire du troisième arbre 5. La deuxième roue dentée additionnelle 19 entraîne alors en rotation la troisième roue dentée additionnelle 20, formant ainsi un deuxième étage de réduction additionnel 22. La troisième roue dentée additionnelle 20 transmet alors le couple 28 au différentiel 23, qui lui-même le transmet à l'essieu 24 du véhicule. La propulsion du véhicule est donc assurée.

Le couple 28 est donc transmis selon quatre étages de réduction successifs. Pour chacun de ces quatre étages de réduction, et tel que cela est illustré sur la [Fig.3], le couple 28 est transmis d'une roue dentée plus petite vers une roue dentée plus grande, entraînant ainsi une baisse de la vitesse de rotation à quatre reprises, à raison d'une baisse de vitesse par étage de réduction. Cette réduction permet de compenser la faiblesse du couple généré à l'origine par le moteur électrique 2, et de créer ainsi une propulsion efficace du véhicule, malgré le faible couple du moteur électrique 2. A titre d'exemple non limitatif, dans cette première configuration du premier mode de réalisation alternatif, le rapport de réduction global créé peut être environ égal à 30.

La [Fig.4] illustre la transmission d'un couple 28 généré par le moteur électrique 2 et transmis jusqu'à l'essieu 24 dans le premier mode de réalisation alternatif de l'ensemble moto-réducteur 1, selon la deuxième configuration évoquée précédemment, c'est-à-dire avec le coupleur 15 qui est solidarisé à la quatrième roue dentée 14.

Tout comme pour la première configuration, le fonctionnement du moteur électrique 2 implique la rotation de l'arbre de sortie moteur, c'est-à-dire le premier arbre 3, et la rotation en conséquence de la première roue dentée 6, qui elle-même entraîne en rotation la deuxième roue dentée 7 selon le premier étage de réduction 16. Et la rotation de la deuxième roue dentée 7 implique la rotation du deuxième arbre 4, à une vitesse réduite par rapport à la rotation du premier arbre 3.

Le coupleur 15 est cette fois positionné le long du deuxième arbre 4 pour coopérer avec la quatrième roue dentée 14, de sorte que c'est la quatrième roue dentée 14 qui est entraînée en rotation lorsque le deuxième arbre tourne et non pas la troisième roue dentée comme dans la première configuration précédemment décrite. C'est donc la quatrième roue dentée 14 qui entraîne la rotation du bloc de roue dentées 29, en interagissant avec la deuxième roue dentée d'entraînement 13. Le deuxième étage de rotation 17 est donc ici mis en œuvre entre la quatrième roue dentée 14 et la deuxième roue dentée d'entraînement 13.

L'ensemble du bloc de roues dentées 29 est entraîné en rotation du fait cette fois du mouvement de la deuxième roue dentée d'entraînement 13.

La première roue dentée d'entraînement 12 est configurée pour coopérer avec la troisième roue dentée 8 de sorte que la mise en rotation du bloc de roues dentées 29 génère un engrenage entre la première roue d'entraînement 12 et la troisième roue dentée 8, mais il convient de noter que cet engrenage n'a pas de conséquence sur le fonctionnement précédemment décrit puisque les deux roues dentées de cet engrenage sont montées libre en rotation et non couplées sur leur arbre respectif.

Le couple 28 est par la suite transmis de la roue dentée de sortie 10 jusqu'à l'essieu 24 tel que cela a été décrit pour la première configuration du premier mode de réalisation alternatif.

Tout comme pour la première configuration, le couple 28 ici est transmis selon quatre étages de réduction successifs. Le couple 28 est notamment transmis d'une roue dentée plus petite vers une roue dentée plus grande seulement au niveau du premier étage de réduction 16, du premier étage de réduction additionnel 21 et du deuxième étage de réduction additionnel 22. La deuxième configuration diffère toutefois de la première configuration en ce que le deuxième étage de réduction 17 est tel que le couple est transmis de la quatrième roue dentée 14 vers la deuxième roue dentée d'entraînement 13 qui présente un diamètre plus petit que celui de la quatrième roue dentée 14. Il en résulte que la vitesse de rotation de la roue dentée de sortie 10 est plus élevé dans cette deuxième configuration que lorsque celle-ci est entraînée en rotation selon la première configuration. Un tel différentiel de vitesse est également observé au niveau de l'essieu 24 étant donné que la transmission du couple 28 entre la roue dentée de sortie 10 et l'essieu 24 est identique pour les deux configurations, de sorte que l'essieu 24 est entraîné en rotation à une vitesse plus élevée, à vitesse égale du moteur électrique 2, lorsque l'ensemble moto-réducteur 1 est agencé selon la deuxième configuration. On comprend ainsi que la deuxième configuration est mise en œuvre lorsque le véhicule est destiné à rouler à vitesse élevée, par exemple 100-110 km/h, tandis que la première configuration est mise en œuvre pour une propulsion du véhicule à une vitesse plus modérée. A titre de comparaison avec l'exemple chiffré donné pour la première configuration du dispositif de réduction, la modification de ce deuxième étage de réduction peut réduire le rapport de réduction selon la deuxième configuration à une valeur qui peut être égale à 16.

Il est à noter que, tel qu'illustré sur la [Fig.2], le coupleur 15 peut être disposé selon une position neutre entre la troisième roue dentée 8 et la quatrième roue dentée 14, de sorte que ces deux roues dentées restent montées libres en rotation autour du deuxième arbre 4. Dans cette troisième configuration, le moteur électrique peut ainsi être découplé de l'essieu. Cette troisième configuration est utile en mode hybride pour ne pas entrainer le moteur électrique quand celui-ci n'est plus utilisé pour la propulsion du véhicule.

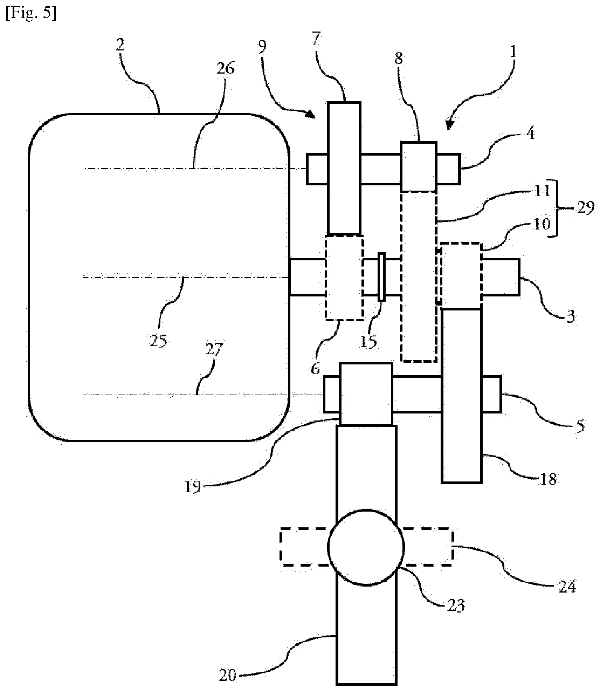

La [Fig.5] représente un deuxième mode de réalisation alternatif de l'ensemble moto-réducteur 1 selon l'invention, qui permet là encore un rapport de réduction important dans un encombrement réduit, et avec deux configurations permettant d'obtenir deux rapports de réduction différents, et une troisième configuration avec le coupleur 15 en position neutre, tel que cela est représenté sur la [Fig.5]. Par rapport au premier mode de réalisation alternatif, le deuxième mode de réalisation alternatif présente l'avantage de comporter un nombre moins élevé de roues dentées, tout en conservant un rapport de réduction élevé.

Selon le deuxième mode de réalisation alternatif, le deuxième arbre 4 ne comprend que la deuxième roue dentée 7 et la troisième roue dentée 8, toutes deux directement liées au deuxième arbre 4. Le bloc de roues dentées 29 ne comprend quant à lui que la roue dentée de sortie 10 et une unique roue dentée d'entraînement 11, conformément à ce qui a pu être décrit en référence à la [Fig.1], et l'ensemble des roues dentées de ce bloc est conformément à l'invention libre en rotation autour du premier arbre. L'unique roue d'entraînement 11 est configurée pour engrener avec la troisième roue dentée 8.

Par rapport à ce qui a été précédemment décrit, la première roue dentée 6 présente la particularité dans ce deuxième mode de réalisation alternatif d'être agencée en rotation libre autour du premier arbre 3.

Un coupleur 15 est ici placé au niveau du premier arbre 3, en étant configuré pour être déplacé le long de celui-ci entre une position dans laquelle il coopère avec la première roue dentée 6 et une position dans laquelle il coopère avec la roue dentée d'entraînement 11. Lorsque le coupleur 15 coopère avec l'une des roues entées parmi la première roue dentée 6 ou la roue dentée d'entraînement 11, ladite roue dentée, à l'origine libre en rotation autour du premier arbre 3, est alors solidarisée à celui-ci, par exemple par complémentarité de forme, par attraction magnétique ou autre en fonction du type de coupleur 15 utilisé, et cette roue dentée est alors solidaire en rotation du deuxième arbre 4.

Le reste de l'ensemble moto-réducteur 1, notamment le troisième arbre 5 et les roues dentées additionnelles, présente une configuration similaire au premier mode de réalisation alternatif.

Tout comme pour le premier mode de réalisation alternatif, tous les axes de rotation 25, 26, 27 des arbres 3, 4, 5 sont sécants au moteur électrique 2. Les arbres sont donc tous agencés dans un prolongement du moteur électrique 2.

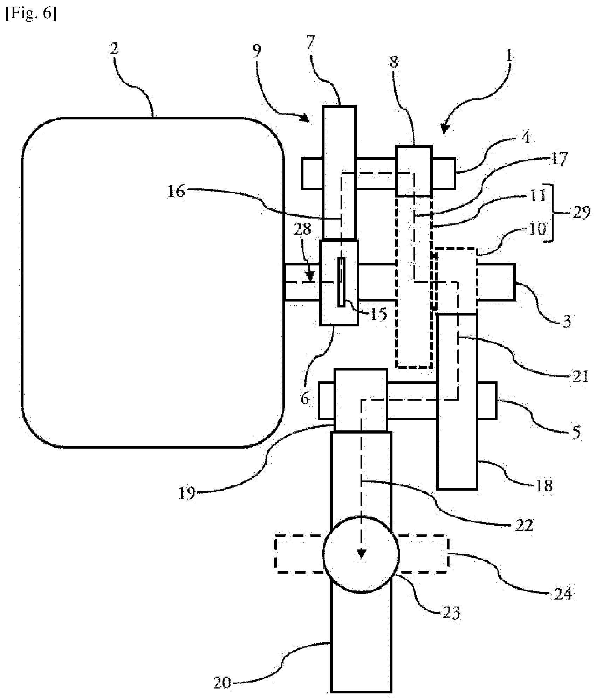

La [Fig.6] illustre la transmission d'un couple 28 généré par le moteur électrique 2 et transmis jusqu'à l'essieu 24 au sein du deuxième mode de réalisation alternatif de l'ensemble moto-réducteur 1, et selon une première configuration conforme à ce qui a été décrit précédemment. Là encore, dans le contexte d'un moteur électrique 48V, à basse tension, le couple en sortie moteur présente une valeur faible et le premier arbre 3 tourne à une vitesse de rotation élevée.

Selon la première configuration, le coupleur 15 solidarise la première roue dentée 6 au premier arbre 3 de sorte que le premier arbre 3 entraîne en rotation uniquement la première roue dentée 6, le bloc de roues dentées étant en libre rotation autour de ce premier arbre. La première roue dentée 6 entraîne en rotation la deuxième roue dentée 7, formant ainsi le premier étage de réduction 16.

La deuxième roue dentée 7 et la troisième roue dentée 8 sont toutes deux liées au deuxième arbre 4. La deuxième roue dentée 7, entraînée par la première roue dentée 6, entraîne donc le deuxième arbre en rotation, qui lui-même entraîne la troisième roue dentée 8 en rotation. La troisième roue dentée 8 et la roue dentée d'entraînement 11 coopèrent en formant le deuxième étage de réduction 17, sans interférence mécanique au niveau du premier arbre 3 étant donné que le bloc de roues dentées 29 est en libre rotation autour du premier arbre 3.

La rotation libre de la roue dentée d'entraînement 11 autour du premier arbre génère la même rotation libre de la roue dentée de sortie 10, qui coopère avec la première roue dentée additionnelle 18 pour transmettre le couple au troisième arbre, en formant le premier étage de réduction additionnel 21. La première roue dentée additionnelle 18 étant solidaire du troisième arbre 5, ce dernier est donc également entraîné en rotation et entraîne à son tour en rotation la deuxième roue dentée additionnelle 19, également solidaire du troisième arbre 5.

La deuxième roue dentée additionnelle 19 entraîne ensuite en rotation la troisième roue dentée additionnelle 20, formant ainsi le deuxième étage de réduction additionnel 22. La troisième roue dentée additionnelle 20 transmet alors le couple 28 au différentiel 23, qui lui-même le transmet à l'essieu 24 du véhicule. La propulsion du véhicule est donc assurée.

Le couple 28 est donc transmis selon quatre étages de réduction successifs. Pour chacun de ces quatre étages de réduction, et tel que cela est illustré sur la [Fig.6], le couple 28 est transmis d'une roue dentée plus petite vers une roue dentée plus grande, entraînant ainsi une baisse de la vitesse de rotation à quatre reprises, à raison d'une baisse de vitesse par étage de réduction. Cette réduction permet de compenser la faiblesse du couple généré à l'origine par le moteur électrique 2, et de créer ainsi une propulsion efficace du véhicule. A titre d'exemple non limitatif, dans cette première configuration du deuxième mode de réalisation alternatif, le rapport de réduction global créé peut être environ égal à 30.

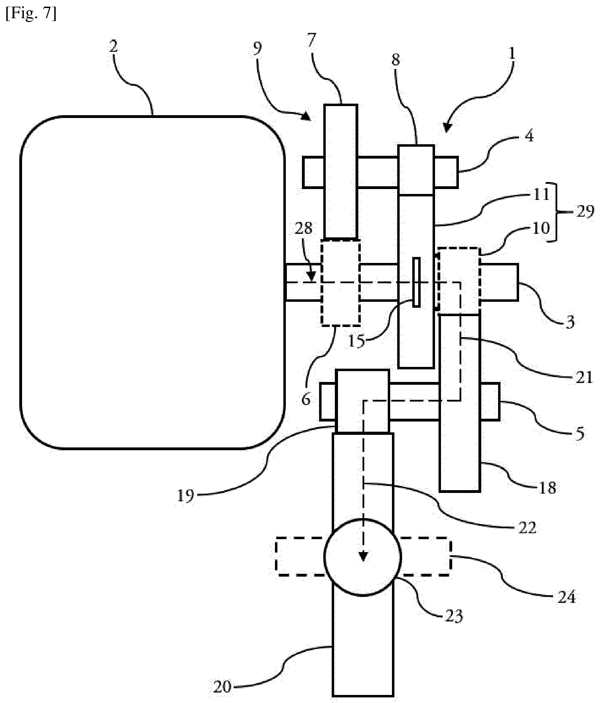

La [Fig.7] illustre la transmission d'un couple 28 généré par le moteur électrique 2 et transmis jusqu'à l'essieu 24 dans le deuxième mode de réalisation alternatif de l'ensemble moto-réducteur 1, selon la deuxième configuration évoquée précédemment, c'est-à-dire avec le coupleur 15 qui est solidarisé à la roue dentée d'entraînement 11.

Dans cette deuxième configuration, la rotation du premier arbre 3 est directement transmise à la roue dentée d'entraînement 11 et donc à la roue dentée de sortie 10 formant avec la roue dentée d'entraînement le bloc de roues dentées 29. La roue dentée de sortie est alors apte à transmettre le couple 28 via le premier étage de réduction additionnel 21 et le couple continue de se transmettre en direction de l'essieu 24 tel que décrit précédemment via le deuxième étage de réduction additionnel 22 et le différentiel 23. Autrement dit, dans cette deuxième configuration, la couple 28 n'est transmis qu'avec deux étages de réduction successifs. Le rapport de réduction global s'en retrouve donc impacté et à titre d'exemple non limitatif, dans cette deuxième configuration du deuxième mode de réalisation alternatif, le rapport de réduction global créé peut être environ égal à 10. Là encore, la deuxième configuration peut être mise en œuvre préférentiellement pour faire rouler le véhicule à vitesse élevée, tandis que la première configuration est plus convenable pour un démarrage ou un roulage du véhicule à une vitesse plus modérée.

Dans cette deuxième configuration, il convient de noter que lorsque la roue dentée d'entraînement 11 est entraînée en rotation par le premier arbre 3, celle-ci entraîne également en rotation la troisième roue dentée 8, qui entraîne en rotation le deuxième arbre 4. Cette rotation du deuxième arbre a pour effet d'entraîner en rotation la deuxième roue dentée 7, qui engrène la première roue dentée 6, néanmoins sans conséquences, étant donné que cette première roue dentée est en rotation libre autour du premier arbre 3.

Tout comme pour le premier mode de réalisation alternatif, il est à noter que le coupleur 15 peut être disposé dans une position intermédiaire entre la première roue dentée 6 et la roue dentée d'entraînement 11, de sorte que ces deux roues dentées restent montées libres en rotation autour du premier arbre. Dans cette configuration, le moteur électrique peut ainsi être découplé de l'essieu.

L'invention, telle qu'elle vient d'être décrite à travers différents modes de réalisation, atteint bien le but qu'elle s'était fixée, et permet de proposer un ensemble moto-réducteur permettant une démultiplication du couple moteur avec un rapport de réduction adapté à une mise en place d'un moteur électrique délivrant un faible couple au sein d'un véhicule électrique ou hybride. Des variantes non décrites ici pourraient être mises en œuvre sans sortir du contexte de l'invention, dès lors que, conformément à l'invention, elles comprennent un ensemble moto-réducteur conforme à l'invention sans sortir du cadre de celle-ci tel que défini par les revendications annexées.

## Revendications

1. Ensemble moto-réducteur électrique (1) d'un véhicule électrique ou hybride, comprenant un premier arbre (3) configuré pour être entraîné en rotation par un moteur électrique (2), un deuxième arbre (4) et un dispositif de réduction (9) comprenant une pluralité de roues dentées agencées sur le premier arbre (3) et le deuxième arbre (4), le dispositif de réduction (9) étant configuré pour transmettre un couple (28) généré par le moteur électrique (2) jusqu'à un différentiel (23) du véhicule via une roue dentée de sortie (10) formant partie du dispositif de réduction (9), le dispositif de réduction (9) comporte au moins deux éléments dentés distincts disposés sur le premier arbre (3) et au moins deux roues dentées (7, 8, 14) distinctes disposées sur le deuxième arbre (4), chaque élément denté disposé sur le premier arbre (3) étant engrené avec l'une des roues dentées disposées sur le deuxième arbre (4), **caractérisé en ce que** la roue dentée de sortie (10) fait partie d'un bloc de roues dentées (29) formant l'un des éléments dentés disposés sur le premier arbre (3).

2. Ensemble moto-réducteur électrique (1) selon la revendication 1, dans lequel le bloc de roues dentées (29) disposé sur le premier arbre (3) est monté en rotation libre autour du premier arbre (3).

3. Ensemble moto-réducteur électrique (1) selon la revendication 1 ou 2, dans lequel le dispositif de réduction (9) comprend une première roue dentée (6) agencée autour du premier arbre (3) et le bloc de roues dentées (29) liées entre elles et monté en libre rotation autour du premier arbre (3), le bloc de roues dentées comprenant la roue dentée de sortie (10) et au moins une roue dentée d'entraînement (11) apte à engrener une roue dentée du deuxième arbre et entraîner la roue dentée de sortie (10) en rotation.

4. Ensemble moto-réducteur électrique (1) selon la revendication précédente, dans lequel le dispositif de réduction (9) comprend une deuxième roue dentée (7) et une troisième roue dentée (8) agencée autour du deuxième arbre (4), la deuxième roue dentée (7) étant apte à interagir avec la première roue dentée (6) de sorte à former un premier étage de réduction (16), la troisième roue dentée (8) étant apte à interagir avec la roue dentée d'entraînement (11) du bloc de roues dentées (29) de sorte à former un deuxième étage de réduction (17).

5. Ensemble moto-réducteur électrique (1) selon la revendication précédente, dans lequel la troisième roue dentée (8) est montée en libre rotation autour du deuxième arbre (4) et dans lequel le deuxième arbre (4) comprend un coupleur (15) apte à être déplacé le long du deuxième arbre (4) et à coopérer avec la troisième roue dentée (8) pour coupler en rotation le deuxième arbre (4) avec la troisième roue dentée (8).

6. Ensemble moto-réducteur électrique (1) selon la revendication précédente, dans lequel le dispositif de réduction (9) comprend une quatrième roue dentée (14) agencée en libre rotation autour du deuxième arbre (4), le coupleur (15) étant apte à coopérer avec la quatrième roue dentée (14) et étant configuré pour être entraîné en rotation par le deuxième arbre (4) et pour entraîner en rotation la quatrième roue dentée (14) en cas de coopération avec celle-ci.

7. Ensemble moto-réducteur électrique (1) selon l'une quelconque des revendications 2 à 6, dans lequel la roue dentée d'entraînement (11) est une première roue dentée d'entraînement (12), le bloc de roues dentées (29) comprenant une deuxième roue dentée d'entraînement (13) apte à coopérer avec l'une des roues dentées du deuxième arbre (4) pour entraîner la roue dentée de sortie (10) en rotation.

8. Ensemble moto-réducteur électrique (1) selon la revendication précédente, combiné avec la revendication 6, dans lequel la troisième roue dentée (8) est apte à interagir avec la première roue dentée d'entraînement (12) et la quatrième roue dentée (14) est apte à interagir avec la deuxième roue dentée d'entraînement (13), le deuxième étage de réduction (17) étant formé par l'interaction entre la troisième roue dentée (8) et la première roue dentée d'entraînement (12) selon une première configuration, et par l'interaction entre la quatrième roue dentée (14) et la deuxième roue dentée d'entraînement (13) selon une deuxième configuration.

9. Ensemble moto-réducteur électrique (1) selon l'une quelconque des revendications 1 à 4, dans lequel la première roue dentée (6) est en libre rotation autour du premier arbre (3) et dans lequel le premier arbre (3) comprend un coupleur (15) apte à être déplacé le long du premier arbre (3) et à coopérer avec la première roue dentée (6) ou avec la roue dentée d'entraînement (11), le coupleur (15) étant configuré pour être entraîné en rotation par le premier arbre (3) et pour entraîner en rotation la première roue dentée (6) ou la roue dentée d'entraînement (11) en cas de coopération avec l'une ou l'autre.

10. Ensemble moto-réducteur électrique (1) selon la revendication précédente, dans lequel le coupleur (15) est apte à agencer le dispositif de réduction (9) selon une première configuration en coopérant avec la première roue dentée (6), ou selon une deuxième configuration en coopérant avec la roue dentée d'entraînement (11).

11. Ensemble moto-réducteur électrique (1) selon l'une quelconque des revendications précédentes, dans lequel un axe de rotation (25) du premier arbre (3) et un axe de rotation (26) du deuxième arbre (4) sont projetés sur le moteur électrique (2).

12. Ensemble moto-réducteur électrique (1) selon l'une quelconque des revendications précédentes, comprenant un troisième arbre (5), le dispositif de réduction (9) comprenant une première roue dentée additionnelle (18), une deuxième roue dentée additionnelle (19), toutes deux agencées autour du troisième arbre (5), et une troisième roue dentée additionnelle (20) configurée pour être associée au différentiel (23) du véhicule.

13. Ensemble moto-réducteur électrique (1) selon la revendication précédente, dans lequel la roue dentée de sortie (10) est apte à entraîner en rotation la première roue dentée additionnelle (18) de sorte à former un premier étage de réduction additionnel (21).

14. Ensemble moto-réducteur électrique (1) selon la revendication précédente, dans lequel la première roue dentée additionnelle (18) est apte à entraîner en rotation la deuxième roue dentée additionnelle (19) via le troisième arbre (5), la deuxième roue dentée additionnelle (19) étant apte à entraîner en rotation la troisième roue dentée additionnelle (20) de sorte à former un deuxième étage de réduction additionnel (22).

15. Ensemble moto-réducteur électrique (1) selon l'une quelconque des revendications 12 à 14, dans lequel le troisième arbre est disposé dans le prolongement du moteur électrique (2), avec l'axe de rotation (27) du troisième arbre (5) qui est projeté sur le moteur électrique (2).

## Patentansprüche

1. Elektrische Getriebemotoranordnung (1) eines Elektro- oder Hybridfahrzeugs, welche eine erste Welle (3), die dafür ausgelegt ist, von einem Elektromotor (2) drehend angetrieben zu werden, eine zweite Welle (4) und eine mehrere auf der ersten Welle (3) und der zweiten Welle (4) angeordnete Zahnräder umfassende Untersetzungsvorrichtung (9) umfasst, wobei die Untersetzungsvorrichtung (9) dafür ausgelegt ist, ein von dem Elektromotor (2) erzeugtes Drehmoment (28) auf ein Differential (23) des Fahrzeugs über ein Abtriebszahnrad (10) zu übertragen, das ein Bestandteil der Untersetzungsvorrichtung (9) ist, wobei die Untersetzungsvorrichtung (9) mindestens zwei verschiedene auf der ersten Welle (3) angeordnete Zahnelemente und mindestens zwei verschiedene auf der zweiten Welle (4) angeordnete Zahnräder (7, 8, 14) aufweist, wobei jedes auf der ersten Welle (3) angeordnete Zahnelement mit einem der auf der zweiten Welle (4) angeordneten Zahnräder kämmt, **dadurch gekennzeichnet, dass** das Abtriebszahnrad (10) Bestandteil eines Zahnräderblocks (29) ist, der eines der auf der ersten Welle (3) angeordneten Zahnelemente bildet.

2. Elektrische Getriebemotoranordnung (1) nach Anspruch 1, wobei der auf der ersten Welle (3) angeordnete Zahnräderblock (29) frei drehend um die erste Welle (3) gelagert ist.

3. Elektrische Getriebemotoranordnung (1) nach Anspruch 1 oder 2, wobei die Untersetzungsvorrichtung (9) ein um die erste Welle (3) angeordnetes erstes Zahnrad (6) und den Zahnräderblock (29), der frei drehend um die erste Welle (3) gelagert ist, umfasst, die miteinander verbunden sind, wobei der Zahnräderblock das Abtriebszahnrad (10) und mindestens ein Antriebszahnrad (11), das geeignet ist, mit einem Zahnrad der zweiten Welle zu kämmen und das Abtriebszahnrad (10) drehend anzutreiben, umfasst.

4. Elektrische Getriebemotoranordnung (1) nach dem vorhergehenden Anspruch, wobei die Untersetzungsvorrichtung (9) ein zweites Zahnrad (7) und ein drittes Zahnrad (8) umfasst, die um die zweite Welle (4) angeordnet sind, wobei das zweite Zahnrad (7) geeignet ist, mit dem ersten Zahnrad (6) derart zu interagieren, dass eine erste Untersetzungsstufe (16) gebildet wird, und wobei das dritte Zahnrad (8) geeignet ist, mit dem Antriebszahnrad (11) des Zahnräderblocks (29) derart zu interagieren, dass eine zweite Untersetzungsstufe (17) gebildet wird.

5. Elektrische Getriebemotoranordnung (1) nach dem vorhergehenden Anspruch, wobei das dritte Zahnrad (8) frei drehend um die zweite Welle (4) gelagert ist und wobei die zweite Welle (4) einen Koppler (15) umfasst, der entlang der zweiten Welle (4) verschiebbar ist und mit dem dritten Zahnrad (8) zusammenwirken kann, um die zweite Welle (4) mit dem dritten Zahnrad (8) drehzukoppeln.

6. Elektrische Getriebemotoranordnung (1) nach dem vorhergehenden Anspruch, wobei die Untersetzungsvorrichtung (9) ein viertes Zahnrad (14) umfasst, das frei drehend um die zweite Welle (4) angeordnet ist, wobei der Koppler (15) geeignet ist, mit dem vierten Zahnrad (14) zusammenzuwirken, und dafür ausgelegt ist, im Falle eines Zusammenwirkens mit diesem von der zweiten Welle (4) drehend angetrieben zu werden und das vierte Zahnrad (14) drehend anzutreiben.

7. Elektrische Getriebemotoranordnung (1) nach einem der Ansprüche 2 bis 6, wobei das Antriebszahnrad (11) ein erstes Antriebszahnrad (12) ist, wobei der Zahnräderblock (29) ein zweites Antriebszahnrad (13) umfasst, das geeignet ist, mit einem der Zahnräder der zweiten Welle (4) zusammenzuwirken, um das Abtriebszahnrad (10) drehend anzutreiben.

8. Elektrische Getriebemotoranordnung (1) nach dem vorhergehenden Anspruch in Verbindung mit Anspruch 6, wobei das dritte Zahnrad (8) geeignet ist, mit dem ersten Antriebszahnrad (12) zu interagieren, und das vierte Zahnrad (14) geeignet ist, mit dem zweiten Antriebszahnrad (13) zu interagieren, wobei die zweite Untersetzungsstufe (17) gemäß einer ersten Konfiguration durch die Interaktion zwischen dem dritten Zahnrad (8) und dem ersten Antriebszahnrad (12) gebildet wird und gemäß einer zweiten Konfiguration durch die Interaktion zwischen dem vierten Zahnrad (14) und dem zweiten Antriebszahnrad (13) gebildet wird.

9. Elektrische Getriebemotoranordnung (1) nach einem der Ansprüche 1 bis 4, wobei das erste Zahnrad (6) frei drehend um die erste Welle (3) ist und wobei die erste Welle (3) einen Koppler (15) umfasst, der entlang der ersten Welle (3) verschiebbar ist und mit dem ersten Zahnrad (6) oder mit dem Antriebszahnrad (11) zusammenwirken kann, wobei der Koppler (15) dafür ausgelegt ist, von der ersten Welle (3) drehend angetrieben zu werden und das erste Zahnrad (6) oder das Antriebszahnrad (11) im Falle eines Zusammenwirkens mit dem einen oder dem anderen drehend anzutreiben.

10. Elektrische Getriebemotoranordnung (1) nach dem vorhergehenden Anspruch, wobei der Koppler (15) geeignet ist, die Untersetzungsvorrichtung (9) gemäß einer ersten Konfiguration anzuordnen, indem er mit dem ersten Zahnrad (6) zusammenwirkt, oder gemäß einer zweiten Konfiguration, indem er mit dem Antriebszahnrad (11) zusammenwirkt.

11. Elektrische Getriebemotoranordnung (1) nach einem der vorhergehenden Ansprüche, wobei eine Drehachse (25) der ersten Welle (3) und eine Drehachse (26) der zweiten Welle (4) auf den Elektromotor (2) projiziert sind.

12. Elektrische Getriebemotoranordnung (1) nach einem der vorhergehenden Ansprüche, welche eine dritte Welle (5) umfasst, wobei die Untersetzungsvorrichtung (9) ein erstes zusätzliches Zahnrad (18), ein zweites zusätzliches Zahnrad (19), die alle beide um die dritte Welle (5) angeordnet sind, und ein drittes zusätzliches Zahnrad (20), das dafür ausgelegt ist, dem Differential (23) des Fahrzeugs zugeordnet zu werden, umfasst.

13. Elektrische Getriebemotoranordnung (1) nach dem vorhergehenden Anspruch, wobei das Abtriebszahnrad (10) geeignet ist, das erste zusätzliche Zahnrad (18) drehend anzutreiben, um so eine erste zusätzliche Untersetzungsstufe (21) zu bilden.

14. Elektrische Getriebemotoranordnung (1) nach dem vorhergehenden Anspruch, wobei das erste zusätzliche Zahnrad (18) geeignet ist, das zweite zusätzliche Zahnrad (19) über die dritte Welle (5) drehend anzutreiben, wobei das zweite zusätzliche Zahnrad (19) geeignet ist, das dritte zusätzliche Zahnrad (20) drehend anzutreiben, um so eine zweite zusätzliche Untersetzungsstufe (22) zu bilden.

15. Elektrische Getriebemotoranordnung (1) nach einem der Ansprüche 12 bis 14, wobei die dritte Welle in der Verlängerung des Elektromotors (2) angeordnet ist, mit der Drehachse (27) der dritten Welle (5), die auf den Elektromotor (2) projiziert ist.

## Claims

1. Electric motor-gearing unit (1) of an electric or hybrid vehicle, comprising a first shaft (3) configured to be rotated by an electric motor (2), a second shaft (4), and a reduction device (9) comprising a plurality of toothed wheels arranged on the first shaft (3) and the second shaft (4), the reduction device (9) being configured to transmit a torque (28) generated by the electric motor (2) to a differential (23) of the vehicle via an output toothed wheel (10) forming part of the reduction device (9), the reduction device (9) comprising at least two separate toothed elements arranged on the first shaft (3) and at least two separate toothed wheels (7, 8, 14) arranged on the second shaft (4), each toothed element arranged on the first shaft (3) being in mesh with one of the toothed wheels arranged on the second shaft (4), **characterized in that** the output toothed wheel (10) is part of a toothed-wheels subassembly (29) forming one of the toothed elements arranged on the first shaft (3).

2. Electric motor-gearing unit (1) according to Claim 1, wherein the toothed-wheels subassembly (29) arranged on the first shaft (3) is mounted free to rotate about the first shaft (3).

3. Electric motor-gearing unit (1) according to Claim 1 or 2, wherein the reduction device (9) comprises a first toothed wheel (6) arranged around the first shaft (3), and the subassembly (29) of toothed wheels that are joined to one another and which is mounted free to rotate about the first shaft (3), the toothed-wheels subassembly comprising the output toothed wheel (10) and at least one driving toothed wheel (11) able to mesh with a toothed wheel of the second shaft and to drive the rotation of the output toothed wheel (10).

4. Electric motor-gearing unit (1) according to the preceding claim, wherein the reduction device (9) comprises a second toothed wheel (7) and a third toothed wheel (8) arranged about the second shaft (4), the second toothed wheel (7) being able to interact with the first toothed wheel (6) so as to form a first reduction stage (16), the third toothed wheel (8) being able to interact with the driving toothed wheel (11) of the toothed-wheels subassembly (29) so as to form a second reduction stage (17).

5. Electric motor-gearing unit (1) according to the preceding claim, wherein the third toothed wheel (8) is mounted free to rotate about the second shaft (4) and wherein the second shaft (4) comprises a coupler (15) able to be moved along the second shaft (4) and to collaborate with the third toothed wheel (8) in order to rotationally couple the second shaft (4) with the third toothed wheel (8).

6. Electric motor-gearing unit (1) according to the preceding claim, wherein the reduction device (9) comprises a fourth toothed wheel (14) arranged free to rotate about the second shaft (4), the coupler (15) being able to collaborate with the fourth toothed wheel (14) and being configured to be driven in rotation by the second shaft (4) and to drive the rotation of the fourth toothed wheel (14) when it is collaborating therewith.

7. Electric motor-gearing unit (1) according to any one of Claims 2 to 6, wherein the driving toothed wheel (11) is a first driving toothed wheel (12), the toothed-wheels subassembly (29) comprising a second driving toothed wheel (13) able to collaborate with one of the toothed wheels of the second shaft (4) in order to drive the rotation of the output toothed wheel (10).

8. Electric motor-gearing unit (1) according to the preceding claim combined with Claim 6, wherein the third toothed wheel (8) is able to interact with the first driving toothed wheel (12) and the fourth toothed wheel (14) is able to interact with the second driving toothed wheel (13), the second reduction stage (17) being formed by the interaction between the third toothed wheel (8) and the first driving toothed wheel (12) in a first configuration, and by the interaction between the fourth toothed wheel (14) and the second driving toothed wheel (13) in a second configuration.

9. Electric motor-gearing unit (1) according to any one of Claims 1 to 4, wherein the first toothed wheel (6) is free to rotate about the first shaft (3) and wherein the first shaft (3) comprises a coupler (15) able to be moved along the first shaft (3) and to collaborate with the first toothed wheel (6) or with the driving toothed wheel (11), the coupler (15) being configured to be driven in rotation by the first shaft (3) and to drive the rotation of the first toothed wheel (6) or the driving toothed wheel (11) when it is collaborating with the one or with the other.

10. Electric motor-gearing unit (1) according to the preceding claim, wherein the coupler (15) is able to place the reduction device (9) in a first configuration in collaboration with the first toothed wheel (6), or in a second configuration in collaboration with the driving toothed wheel (11).

11. Electric motor-gearing unit (1) according to any one of the preceding claims, wherein an axis of rotation (25) of the first shaft (3) and an axis of rotation (26) of the second shaft (4) are projected onto the electric motor (2).

12. Electric motor-gearing unit (1) according to any one of the preceding claims, comprising a third shaft (5), the reduction device (9) comprising a first additional toothed wheel (18), a second additional toothed wheel (19), both arranged around the third shaft (5), and a third additional toothed wheel (20) which is configured to be associated with the differential (23) of the vehicle.

13. Electric motor-gearing unit (1) according to the preceding claim, wherein the output toothed wheel (10) is able to drive the rotation of the first additional toothed wheel (18) so as to form a first additional reduction stage (21).

14. Electric motor-gearing unit (1) according to the preceding claim, wherein the first additional toothed wheel (18) is able to drive the rotation of the second additional toothed wheel (19) via the third shaft (5), the second additional toothed wheel (19) being able to drive the rotation of the third additional toothed wheel (20) so as to form a second additional reduction stage (22).

15. Electric motor-gearing unit (1) according to any one of Claims 12 to 14, wherein the third shaft is arranged in the continuation of the electric motor (2), with the axis of rotation (27) of the third shaft (5) being projected onto the electric motor (2).
